# FASCICULE DE BREVET EUROPEEN

(11) **EP 0 565 390 B1**
(45) Date de publication et mention de la délivrance du brevet: **23.10.1996**
(21) Numéro de dépôt: 93400493.8
(22) Date de dépôt: 25.02.1993
(51) Int. Cl.: B60N 2/10, B60N 2/30, B60N 2/32, B60N 2/50

(54) **Siège perfectionné à positions multiples**
Mehrfach verstellbarer Sitz
Multi-position seat

(30) Priorité: 10.04.1992 FR 9204448
(43) Date de publication de la demande: 13.10.1993
(73) Titulaire: CESA COMPAGNIE EUROPEENNE DE SIEGES POUR AUTOMOBILES, F-92307 Levallois-Perret Cédex (FR)
(72) Inventeur: Fourrey, François, F-25200 Montbeliard (FR); Baret, Frédéric, F-90000 Belfort (FR); Verhoog, Roel, F-25700 Valentigney (FR); Gaurrand, Frédéric, F-70400 Hericourt (FR)
(74) Mandataire: Polus, Camille

(56) Documents cités:
- EP-A- 0 232 685
- EP-A- 0 232 687
- EP-A- 0 364 146
- FR-A- 2 556 294
- US-A- 3 711 149
- US-A- 3 879 007

## Description

La présente invention concerne les sièges et, plus particulièrement, les sièges d'automobiles aptes à occuper plusieurs positions.

La tendance contemporaine des constructeurs d'automobiles est de concevoir des véhicules dits "un volume" ou "monospace" ou encore "monocorps" qui tiennent à la fois de la conduite intérieure dite break et du véhicule utilitaire dit fourgonnette. Etant donnée l'universalité d'utilisation visée pour ces véhicules, il est nécessaire de les équiper de sièges aptes à prendre des positions multiples et variées.

On connaît en particulier dans l'état de la technique un siège notamment pour véhicule automobile, du type comprenant une assise avec une armature pour porter un coussin, un dossier avec une armature pour porter un coussin, un piètement de support de l'assise muni d'au moins deux pieds, l'un avant et l'autre arrière, destinés à être reliés à un plancher, et un mécanisme de changement d'orientation relative de l'assise et du dossier.

Des sièges de ce type sont décrits par exemple dans EP-A-0 232 685 et EP-A-0 364 146.

De tels sièges doivent par exemple pouvoir se déployer complètement en couchette, en fauteuil détente ou "relax", en siège ou partiellement en tablette et doivent pouvoir se rétracter pour se rabattre partiellement ou se replier totalement en vue de leur escamotage dans le véhicule ou de leur enlèvement de ce dernier.

De tels sièges doivent aussi répondre à des normes de sécurité édictées par les organismes professionnels ou les Pouvoirs Publics, et être produits au moindre coût.

On saisit la difficulté qu'il y a à satisfaire à l'ensemble de ces contraintes, souvent contradictoires, et c'est ce que se propose le siège perfectionné à positions multiples selon l'invention.

L'invention a pour objet un siège, du type précité, caractérisé en ce que le piètement comprend au moins un organe formant le pied avant muni d'une extrémité inférieure destinée à être reliée au plancher par une articulation, et au moins une bielle avant latérale muni d'une extrémité inférieure articulée à proximité de l'extrémité inférieure du pied avant et d'une extrémité supérieure articulée sur l'armature de l'assise approximativement dans sa zone médiane, et en ce que le mécanisme comprend deux axes parallèles réunis par une biellette et deux secteurs dentés montés chacun sur l'un de ces axes et engrenant l'un sur l'autre, qui sont solidaires l'un de l'armature de l'assise et l'autre de l'armature du dossier, l'axe portant le secteur denté solidaire de l'armature du dossier formant un axe principal de rotation du dossier et étant porté par l'extrémité supérieure du pied avant.

D'autres caractéristiques de l'invention ressortiront de la lecture de la description et des revendications qui suivent ainsi que de l'examen du dessin annexé, donné seulement à titre d'exemple, où :

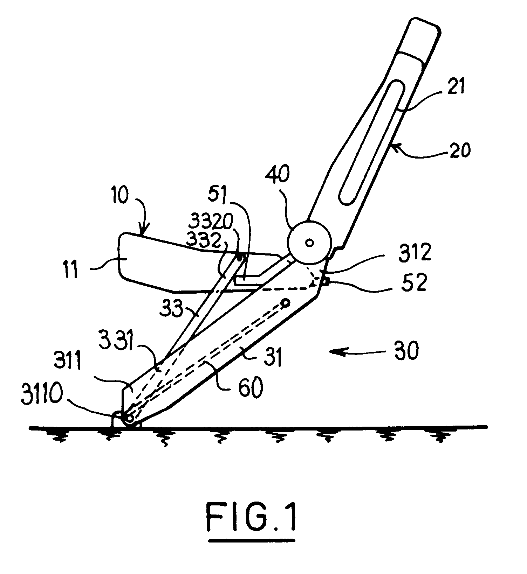

- la Figure 1 illustre un mode de réalisation d'un siège selon l'invention en position "normale";

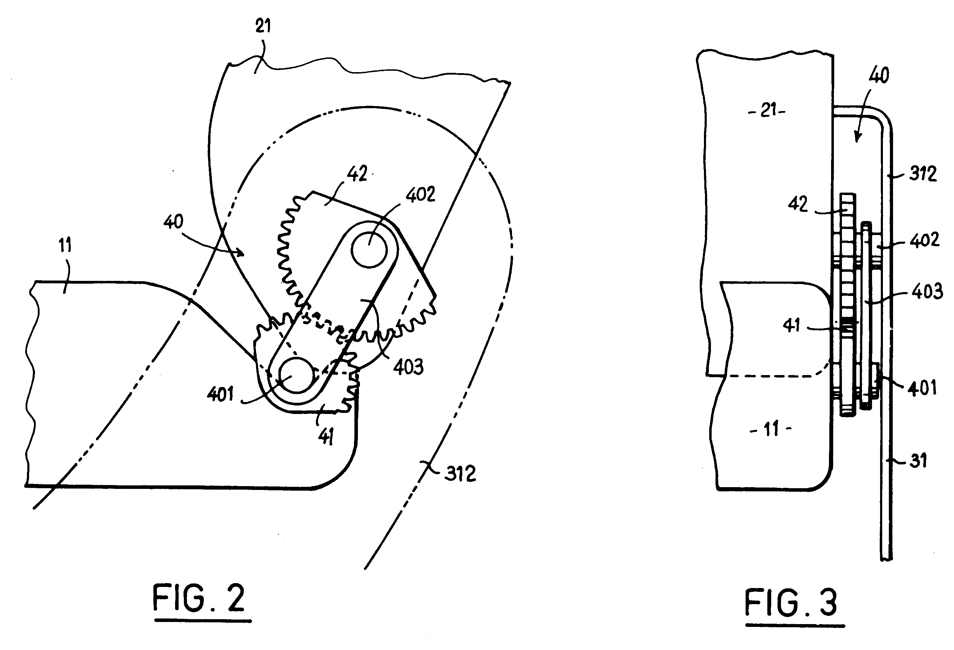

- la Figure 2 illustre en détail un mode de réalisation du mécanisme d'un siège selon l'invention; et,
- la Figure 3 est une vue de côté du mécanisme de la Figure 2 représentée en élévation.

Les sièges notamment pour véhicule étant bien connus dans la technique, on ne décrira dans ce qui suit que ce qui concerne directement ou indirectement l'invention. Pour le surplus, l'homme du métier de la technique considérée puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation ou sa variante d'exécution.

Pour la commodité de l'exposé, on décrira successivement chacun des constituants de l'invention avant d'en exposer le montage et le fonctionnement.

Comme on le voit, un siège, notamment pour automobile, selon l'invention comprend, essentiellement, notamment une assise 10, un dossier 20, un piètement 30 et un mécanisme 40 intercalé entre l'assise et le dossier.

Un tel siège étant en pratique symétrique par rapport à un plan vertical parallèle à l'axe longitudinal du véhicule, le siège selon l'invention est représenté seulement en élévation, vu d'un seul côté, pour la simplification de la représentation.

L'assise 10 et le dossier 20 comprennent chacun une armature 11 et 21, respectivement. Ces armatures sont faites en métal par exemple à l'aide de tôles ou tubes emboutis, ou en résine synthétique renforcée par des fibres et modifiée par des charges appropriées, moulée.

S'il y a lieu, le dossier 20 est équipé d'un appui-tête et d'accoudoirs. Au besoin, un tel siège reçoit et porte solidaire de lui une ceinture de sécurité avec ou sans enrouleur.

Le piètement 30 seulement illustré partiellement comprend, essentiellement, au moins un pied avant 31 et de préférence deux latéraux, ainsi que par exemple au moins un pied arrière de même qu'une timonerie avec des bielles reliant s'il y a lieu entre eux pieds et armatures. Comme on le voit, le pied avant 31 a son extrémité inférieure 311 qui est destinée à être fixée à un plancher par une articulation 3110 et a son extrémité supérieure 312 qui est destinée à être reliée à l'armature 21 du dossier 20 par l'entremise du mécanisme 40, comme on le comprendra par la suite. Pour la simplification de l'exposé et du dessin, le ou les pieds arrière ainsi que la timonerie ne sont ni décrits, ni illustrés en totalité.

La timonerie comprend au moins une bielle avant latérale 33 et de préférence deux. Les deux bielles avant 33 latérales ont leur extrémité inférieure 331 qui est montée sur une articulation par exemple l'articulation 3110 de l'extrémité inférieure 311 du pied avant 31 et leur extrémité supérieure 332 qui est reliée à l'armature 11 de l'assise 10, approximativement, dans sa zone médiane, par une articulation 3320. L'articulation de l'extrémité inférieure 331 de la bielle 33 peut ne pas être confondue à l'articulation 3110 de l'extrémité inférieure 311 du pied avant 31 mais de préférence proche de celle-ci. Cette articulation de la bielle 33 est proche, de préférence, de l'articulation 3110, et peut être associée par exemple au plancher ou au pied avant.

L'articulation 3110 qui relie le piètement du siège selon l'invention au plancher d'un véhicule est, par exemple, faite d'un gousset ou similaire et d'un axe, de manière à rendre de préférence le siège amovible. Cette articulation est munie s'il y a lieu de systèmes d'accrochage et de systèmes de verrouillage de tout type classique courant connu approprié, à cette fin.

Le mécanisme 40 comprend deux axes 401, 402 parallèles, réunis par au moins une biellette 403 et deux secteurs dentés 41, 42. Comme on peut l'observer sur le dessin, chacun de ces secteurs dentés est monté sur l'un des axes 401, 402 respectivement ; ces secteur dentés engrènent l'un sur l'autre. Le premier secteur denté 41 est solidaire de l'armature 11 de l'assise 10 alors que le deuxième secteur denté 42 est, lui, solidaire de l'armature 21 du dossier 20. Comme on peut l'observer, l'axe 402 qui porte ledit secteur denté 42 solidaire de l'armature 21 du dossier 20, est fixé à proximité de l'extrémité supérieure 312 du pied avant 31 et constitue l'axe principal de rotation du dossier.

Le siège suivant l'invention est aussi muni d'organes de manoeuvre 51, 52 et de systèmes de verrouillage 60 par exemple à tringles et à crans, de tout type connu approprié, qui permettent de modifier à volonté la position donnée au siège puis de l'immobiliser dans la position choisie. Ces organes et systèmes sont, s'il y a lieu, interdépendants de manière que par exemple le système de verrouillage 60 ne puisse autoriser la séparation du piètement d'avec le plancher que lorsque le siège occupe une position bien définie prédéterminée.

Comme on peut l'observer, grâce au mécanisme selon l'invention, on peut modifier d'une manière progressive l'orientation relative des assise et dossier et grâce aux organes de manoeuvre fixer l'orientation choisie entre diverses positions bien définies, par exemple dans le cas présent six, à savoir de l'encombrement minimal au déploiement maximal, une position rétractée totalement repliée, une position rétractée rabattue intermédiaire, une position tablette, une position normale ou de conduite, une position détente ou "relax" et une position couchette. Lors de la rotation du dossier 20 autour de l'axe 402 du mécanisme, le dossier 20 entraîne un déplacement de l'assise 10 convenablement adapté par l'entremise du premier secteur denté 41 sur lequel il engrène et qui est solidaire de l'assise 10. Le mécanisme 40 selon l'invention permet donc des mouvements relatifs et concomitants de l'assise et du dossier pour atteindre les buts fixés, par exemple abaissement et recul de l'assise pour la position tablette, soulèvement et avance de l'assise afin de l'aligner avec le dossier pour la position couchette,....

Le pied avant, la bielle, l'armature de l'assise et ce qui leur est associé forme un polygone, de préférence en quadrilatère, déformable qui permet les changements programmés et synchrones d'orientation relative.

De préférence, le pied arrière est articulé pour permettre le repliage du siège sur le pied avant afin d'en réduire l'encombrement en position rétractée repliée. Le repliement total, outre le gain de place qu'il permet de procurer lorsque le siège est laissé dans le véhicule, favorise ensuite son enlèvement s'il y a lieu, pour débarrasser totalement le volume intérieur du véhicule et libérer de la surface au sol.

Il est clair qu'un siège selon l'invention comprend un mécanisme de chaque côté ou bien un seul mécanisme placé soit du côté droit soit du côté gauche.

On comprend tout l'intérêt d'un siège selon l'invention et la description a montré les principaux avantages qu'il apportait.

## Revendications

1. Siège notamment pour véhicule automobile, du type comprenant une assise (10) avec une armature (11) pour porter un coussin, un dossier (20) avec une armature (21) pour porter un coussin, un piètement (30) de support de l'assise (10) muni d'au moins deux pieds, l'un avant et l'autre arrière, destinés à être reliés à un plancher et un mécanisme (40) de changement d'orientation relative de l'assise (10) et du dossier (20), caractérisé en ce que le piètement (30) comprend au moins un organe formant le pied avant (31) muni d'une extrémité inférieure (311) destinée à être reliée au plancher par une articulation (3110), et au moins une bielle avant (33) latérale munie d'une extrémité inférieure (331) articulée à proximité de l'extrémité inférieure (311) du pied avant (31) et d'une extrémité supérieure (332) articulée sur l'armature (11) de l'assise (10) approximativement dans sa zone médiane, et en ce que le mécanisme (40) comprend deux axes (401, 402) parallèles réunis par une biellette (403) et deux secteurs dentés (41, 42) montés chacun sur l'un de ces axes (401, 402) et engrenant l'un sur l'autre, qui sont solidaires l'un (41) de l'armature (11) de l'assise (10) et l'autre (42) de l'armature (21) du dossier (20), l'axe (402) portant le secteur (42) denté solidaire de l'armature (21) du dossier (20) formant un axe principal de rotation du dossier et étant porté par l'extrémité supérieure (312) du pied avant (31).

2. Siège selon la revendication 1, caractérisé en ce que l'articulation (3110) de l'extrémité inférieure (311) du pied avant (31) comprend un axe et un gousset.

3. Siège selon l'une quelconque des revendications 1 ou 2, caractérisé en ce que le piètement (30) est fait au moins pour partie en tôle emboutie.

4. Siège selon l'une quelconque des revendications 1 à 3, caractérisé en ce que l'articulation (3110) est apte à maintenir au sol le siège de manière amovible.

5. Siège selon l'une quelconque des revendications 1 à 4, caractérisé en ce que l'articulation de l'extrémité inférieure (331) de la bielle avant (33) est confondue avec l'articulation (3110) de l'extrémité inférieure (311) du pied avant (31).

## Claims

1. Seat in particular for motor vehicles of the type comprising a seating surface (10) with a frame (11) to support a cushion, a seat back (20) with a frame (21) to support a cushion, a base frame (30) for supporting the seating surface (10) fitted with at least two legs, one at the front and the other at the rear, for connection to a floor and a mechanism (40) for changing the relative position of the seating surface (10) and the seat back (20), characterised in that the base frame (30) comprises at least one member forming the front leg (31) fitted with a bottom end portion (311) for connection to the floor via a pivot joint (3110), and at least one lateral front tie rod (33) fitted with a bottom end portion (331) articulated in the vicinity of the bottom end portion (311) of the front leg (31) and with an upper end portion (332) articulated to the frame of the seating surface (10) approximately in its central zone; and that said mechanism (40) comprises two parallel axes (401, 402) joined by a small rod (403) and two toothed quadrants (41, 42), each mounted on one of these axes (401, 402) and intermeshing, one (41) being integral to the frame (11) of the seating surface (10) and the other (42) being integral to the frame (21) of the seat back (20), the axis (402) supporting the toothed quadrant (42) which is integral to the frame (21) of the seat back (20) forming a main axis of rotation of the seat back and being supported by the upper end portion (312) of the front leg (31).

2. Seat according to Claim 1, characterised in that the pivot joint (3110) of the lower end portion (311) of the front leg (31) comprises an axis and a corner piece.

3. Seat according to any one of Claims 1 or 2, characterised in that the base frame (30) is at least partially made from embossed metal plate.

4. Seat according to any one of Claims 1 to 3, characterised in that the pivot joint (3110) is capable of holding the seat to the ground in a detachable manner.

5. Seat according to any one of Claims 1 to 4, characterised in that the pivot joint of the bottom end portion (331) of the front tie rod (33) is fused to the pivot joint (3110) of the bottom end portion (311) of the front leg (31).

## Patentansprüche

1. Sitz, insbesondere für ein Kraftfahrzeug, bestehend aus einer Sitzfläche (10) mit einem Beschlag (11), um einen Polster zu tragen, einer Rückenlehne (20) mit einem Beschlag (21), um einen Polster zu tragen, einem Tragegestell (30) für die Sitzfläche (10), das mit mindestens zwei Füßen, einem vorderen und einem hinteren, versehen ist, die dazu bestimmt sind, mit einem Fußbrett verbunden zu werden, und einem Mechanismus (40) zur Änderung der relativen Ausrichtung der Sitzfläche (10) und der Rückenlehne (20), dadurch gekennzeichnet, daß das Gestell (30) zumindest ein Organ umfaßt, das den Vorderfuß (31) bildet, der mit einem unteren Ende (311) versehen ist, das dazu bestimmt ist, mit dem Fußbrett durch ein Gelenk (3110) verbunden zu werden, und zumindest eine vordere seitliche Kurbelstange (33) umfaßt, die mit einem unteren Ende (331) versehen ist, das in der Nähe des unteren Endes (311) des Vorderfußes (31) gelenkig befestigt ist, und mit einem oberen Ende (332) versehen ist, das auf dem Beschlag (11) der Sitzfläche (10) annähernd im Mittelbereich gelenkig befestigt ist, und daß der Mechanismus (40) zwei parallele Achsen (401, 402) umfaßt, die durch einen Schwingarm (403) und zwei Zahnsegmente (41, 42) verbunden sind, welche jeweils auf einer dieser Achsen (401, 402) montiert sind und ineinander eingreifen, wobei eines (41) mit dem Beschlag (11) der Sitzfläche (10) und das andere (42) mit dem Beschlag (21) der Rückenlehne (20) fest verbunden ist, wobei die Achse (402), die das Zahnsegment (42) trägt, das mit dem Beschlag (21) der Rückenlehne (20) fest verbunden ist, eine Hauptrotationsachse für die Rückenlehne bildet und von dem oberen Ende (312) des Vorderfußes (31) getragen wird.

2. Sitz nach Anspruch 1, dadurch gekennzeichnet, daß das Gelenk (3110) des unteren Endes (311) des Vorderfußes (31) eine Achse und ein Eckstück umfaßt.

3. Sitz nach einem der Ansprüche 1 oder 2, dadurch gekennzeichnet, daß das Gestell (30) zumindest zum Teil aus Buckelblech hergestellt ist.

4. Sitz nach einem der Ansprüche 1 bis 3, dadurch gekennzeichnet, daß das Gelenk (3110) den Sitz beweglich am Boden halten kann.

5. Sitz nach einem der Ansprüche 1 bis 4, dadurch gekennzeichnet, daß das Gelenk des unteren Endes (331) der vorderen Kurbelstange (33) mit dem Gelenk (3110) des unteren Endes (311) des Vorderfußes (31) verschmolzen ist.
